# EUROPEAN PATENT APPLICATION

(11) **EP 3 879 143 A1**
(43) Date of publication of application: **15.09.2021**
(21) Application number: 19883033.3
(22) Date of filing: 20.09.2019
(51) Int. Cl.: F16J 15/10

(54) **GASKET**

(30) Priority: 05.11.2018 JP 2018208047
(71) Applicant: NOK Corporation, Tokyo 105-8585 (JP)
(72) Inventor: ONO Tasuku, Aso-shi, Kumamoto 869-2231 (JP)
(74) Representative: Global IP Europe Patentanwaltskanzlei
(86) International application number: PCT/JP2019/036877
(87) International publication number: WO 2020/095547

(57) **Abstract**

Workability and attachment characteristics of gasket are improved. A gasket configured to be attached to a support body 51 includes: a frame-shaped attachment plate 11, a side wall part 22, a flange part 23, and a gasket body 31. The frame-shaped attachment plate 11 is fastened to the support body 51. The side wall part 22 extends along the peripheral direction of the attachment plate 11. The flange part 23 is arranged along the peripheral direction of the side wall part 22 to define insertion space 24 between the flange part 23 and the attachment plate 11. The gasket body 31 is formed of a rubber-like elastic material by extrusion to have a fixed sectional shape along its entire length, and engages the attachment plate 11 along its entire length without bonded. The gasket body includes a first seal part 32, a second seal part 34, and an insertion protrusion 36. The first seal part 32 contacts the attachment plate 11. The second seal part 34 is arranged opposite to the first seal part 32 to contact a supported body 61. The insertion protrusion 36 is inserted into the insertion space 24.

## Description

### FIELD

The present disclosure relates to a gasket.

### BACKGROUND

With the development of e-Mobility, battery case gaskets which seal against leakage from a gap between a car-body-side part of a vehicle such as car and a battery case arranged in the car-body-side part are under development (e.g., Japanese Patent Laid-Open Publication Nos. 2011-103259 and 2012-122536).

The battery case gaskets have a long peripheral length and a large plan view gasket shape corresponding to a size of such a battery case. For this reason, because such a long battery case gasket cannot be formed by press forming, it is necessarily formed by extrusion.

### BRIEF SUMMARY

### TECHNICAL PROBLEM

Extruded parts have a fixed shape as viewed in a section from its peripheral direction. In order to attach such a gasket to an attachment part, additional processing on an extruded part of the gasket or an attachment groove is required.

However, additional processing on the extruded part will be laborious and increase the cost of production. On the other hand, when a part to which the gasket is attached is formed by press forming, it is difficult to reliably form the attachment groove.

It is an object of the present disclosure to provide a gasket which has improved workability and attachment characteristics.

### SOLUTION TO PROBLEM

One aspect of the present disclosure provides a gasket configured to be attached to a support body, the gasket including:
a frame-shaped attachment plate fastened to the support body;
a side wall part extending along the peripheral direction of the attachment plate;
a flange part arranged along the peripheral direction of the side wall part to define insertion space between the flange part and the attachment plate; and
a gasket body formed of a rubber-like elastic material by extrusion to have a fixed sectional shape along its entire length, and is engaged along an entire length of the attachment plate without bonded,
the gasket body including
   a first seal part that contacts the attachment plate,
   a second seal part arranged opposite to the first seal part to contact a supported body, and
   an insertion protrusion inserted into the insertion space.

### ADVANTAGEOUS EFFECTS

A gasket according to the present disclosure can have improved workability and attachment characteristics.

### BRIEF DESCRIPTION OF DRAWINGS

Fig. 1 is a plan view entirely showing a gasket according to a first embodiment.
Fig. 2 is an enlarged plan view showing a part of the gasket according to the first embodiment.
Fig. 3 is an enlarged perspective view showing a part of the gasket according to the first embodiment.
Fig. 4 is a cross-sectional view taken along the line A-A in Fig. 1.
Fig. 5 is a cross-sectional view showing a part of a gasket according to a second embodiment.

### DETAILED DESCRIPTION

### First Embodiment

A gasket according to this embodiment is a battery case gasket which seals against leakage from a gap between a car-body-side part of a vehicle (e.g., car) and a battery case arranged in the car-body-side part. The gasket is attached on a flat surface of the car-body-side part, and the battery case is arranged on a flat surface of the gasket.

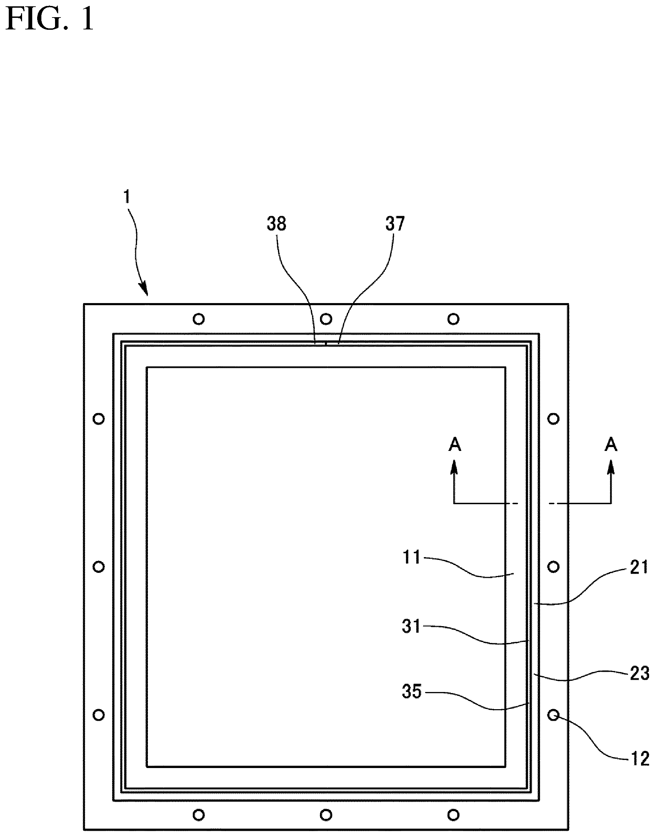

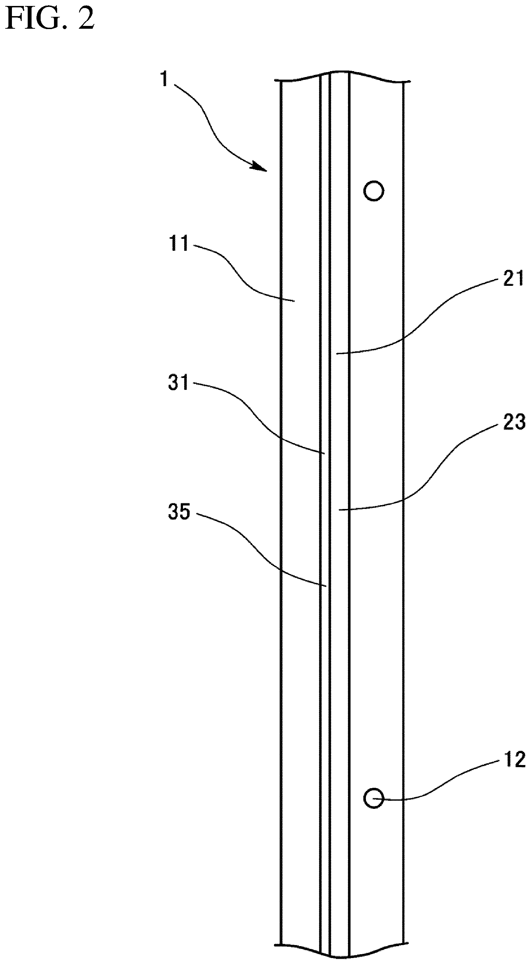

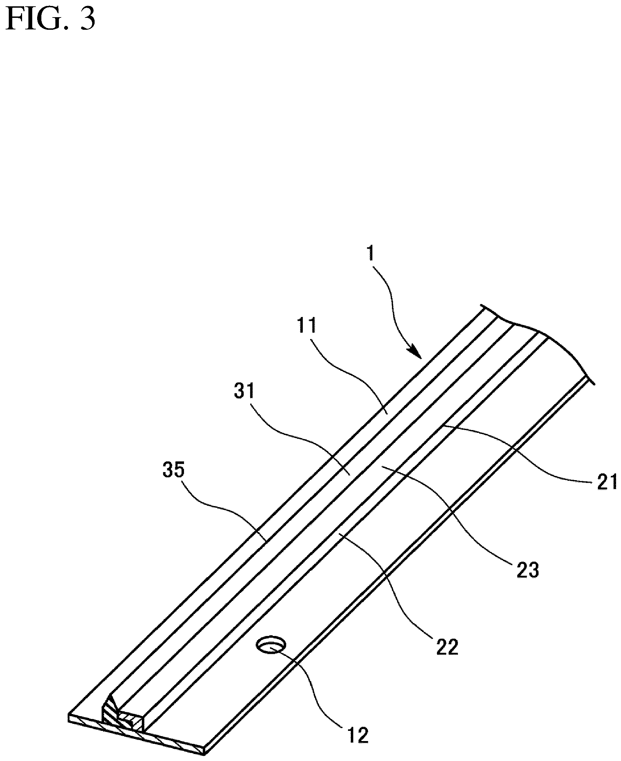

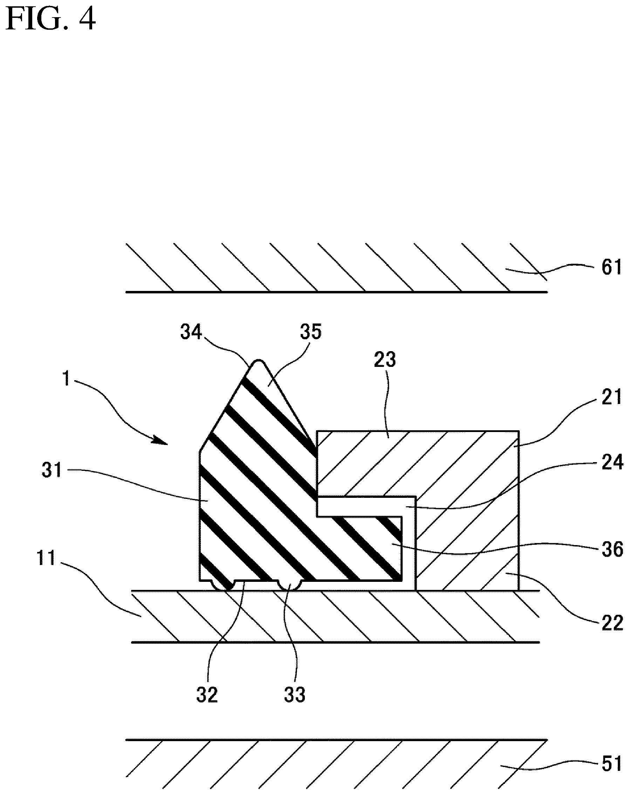

As shown in Figs. 1 to 4, the gasket 1 includes an attachment plate 11, a side wall part 22, a flange part 23, and a gasket body 31. The attachment plate 11 has a frame shape, and is fastened on the flat surface of the car-body- side part (support body) 51. The side wall part 22 extends along the peripheral direction of the attachment plate 11. The flange part 23 is arranged along the peripheral direction of the side wall part 22. Insertion space 24 is defined between the flange part 23 and the attachment plate 11. The gasket body 31 is formed of a rubber-like elastic material by extrusion to have a fixed sectional shape along its entire length. The gasket body 31 engages the attachment plate 11 along the entire length of the attachment plate 11 without bonded. The gasket body 31 includes an insertion protrusion 36. The insertion protrusion 36 is inserted into the insertion space 24.

The attachment plate 11 is a plate-shaped metal part. In order that the battery case (supported body) 61 can be arranged on the attachment plate 11, the attachment plate 11 has a flat rectangular frame shape corresponding to the plan view shape of the battery case 61. The attachment plate 11 has screw through holes 12. The attachment plate 11 is fastened onto the car-body-side part 51 by screws. Although the screw through holes 12 in this embodiment are arranged on the outer periphery side with respect to a collar 21 and the gasket body 31, they may be arranged on the inner periphery side with respect to the collar 21 and the gasket body 31.

The side wall part 22 and the flange part 23 are integrally formed to constitute the collar 21.

The collar 21 is a metal part. The collar 21 has a flat rectangular frame shape similar to the attachment plate 11. The collar 21 is arranged on the attachment plate 11 along its entire length and fixed to the attachment plate 11 by welding. The collar 21 holds the gasket body 31 in place on the flat surface of the attachment plate 11 to reduce a tendency of the gasket body 31 to detach from the attachment plate 11. The flange part 23 is integrally formed to extend inward (toward inner periphery side) of the frame shape from the upper end of the side wall part 22. According to this arrangement, the insertion space 24 into which the insertion protrusion 36 is inserted without bonded is defined between the flange part 23 and the attachment plate 11. In order to easily hold the gasket body 31 in the collar, rounded parts which have an arc shape as viewed in a plan view turning roughly right angle may be formed in the corners of the flat rectangular frame shape.

The gasket body 31 engages the attachment plate 11 and the collar 21 along their entire length without bonded.

A lower end surface of the gasket body 31 serves as a seal part (first seal part) 32 which is brought in contact with the attachment plate 11. Two or more seal beads 33 which have an arc shape as viewed in a cross-sectional view are arranged in the seal part 32 parallel to each other. Stable attachment onto the attachment plate 11 can be provided by the seal beads 33, and as a result the gasket can have good sealing characteristics.

An upper end surface of the gasket body 31 serves as another seal part (second seal part) 34 which is brought in contact with the battery case 61. A seal lip 35 which has a sectionally triangular shape with the same width as the gasket body 31 is arranged in the seal part 34. This seal lip 35 can be easily deformed when the weight of the battery case 61 is put onto the gasket, and as a result the gasket can have good sealing characteristics. All the seal parts 32 and 34, the seal beads 33, and the seal lip 35 extend along the entire length of the gasket body 31.

The gasket body 31 is an extruded part, and is not endless but has ends. The gasket body 31 has ends 37 and 38 on its both ends in the length direction. When the gasket body 31 is placed along the frame shape of the attachment plate 11 and the collar 21 and attached to them, the ends 37 and 38 push each other so that the ends 37 and 38 tightly contact each other. The ends 37 and 38 may be bonded to each other by an adhesive or other bonding means.

However, the extruded part is not subjected to additional processing which changes a part of the shape of the gasket body 31.

The insertion protrusion 36 is integrally formed to protrude outward of the frame shape (toward outer periphery side) from a lower end part of the gasket body 31. The insertion protrusion 36 is inserted into the insertion space 24 without bonded. The insertion protrusion 36 extends along the entire length of the gasket body 31.

The gasket body 31, which is formed by extrusion as extruded part in the gasket 1 according to this embodiment, is not subjected to additional processing. Also, any gasket attachment groove is not formed by press working in the car-body-side part 51 as a part to which the gasket body 31 is attached. Although the arrangement is simple, the gasket body 31 can be held in place so that the gasket body 31 has a good sealing effect. Therefore, the gasket body 31 has improved workability and attachment characteristics.

### Second Embodiment

Although the insertion protrusion 36 is inserted into the space 24 in the gasket 1 according to the first embodiment, it is not bonded onto the interior surface in the insertion space 24. For this reason, the gasket body 31 may be moved away from a part of the periphery of the collar 21, and the insertion protrusion 36 may be detached from the insertion space 24.

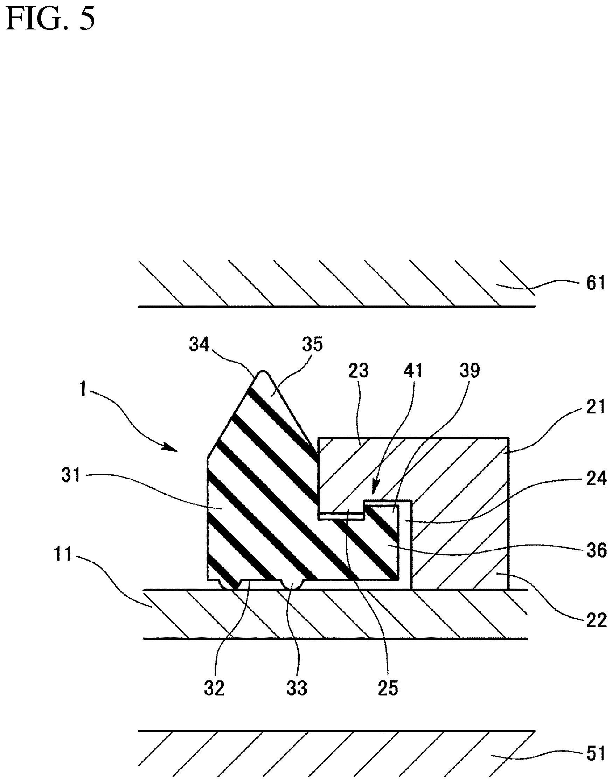

The gasket 1 according to a second embodiment includes a gasket stopper structure 41 as shown in Fig. 5. That is, the flange part 23 includes a first stopper protrusion 25 on its lower surface, and the insertion protrusion 36 includes a second stopper protrusion 39 on its upper surface. The stopper protrusions 25 and 39 can interlock with each other, and constitute the gasket stopper structure 41. According to this embodiment, because the stopper protrusions 25 and 39 interlock with each other, detachment of the insertion protrusion 36 from the insertion space 24 can be prevented.

The side wall part 22 may be integrally formed with the attachment plate 11. In this case, the flange part 23 is fastened to the side wall part 22. Both the side wall part 22 and the flange part 23 may be integrally formed with the attachment plate 11. The gasket body 31 may be attached not on the inner periphery side of the side wall part 22 and the flange part 23 (collar 21) but on the outer periphery side. In this case, the flange part 23 protrudes toward the outer periphery side from the side wall part 22, and the insertion protrusion 36 protrudes toward the inner periphery side from the gasket body 31.

### Reference Signs List

- 1: Gasket
- 11: Attachment Plate
- 12: Screw Through Hole
- 21: Collar
- 22: Side Wall Part
- 23: Flange Part
- 24: Insertion Space
- 25, 39: Stopper Protrusion
- 31: Gasket Body
- 32, 34: Seal Part
- 33: Seal Bead
- 35: Seal Lip
- 36: Insertion Protrusion
- 37, 38: End
- 41: Gasket Stopper Structure
- 51: Car-Body-Side Part ... (Support Body)
- 61: Battery Case (Supported Body)

## Claims

1. A gasket configured to be attached to a support body, the gasket comprising:
a frame-shaped attachment plate fastened to the support body;
a side wall part extending along the peripheral direction of the attachment plate;
a flange part arranged along the peripheral direction of the side wall part to define insertion space between the flange part and the attachment plate; and
a gasket body formed of a rubber-like elastic material by extrusion to have a fixed sectional shape along its entire length, and is engaged along an entire length of the attachment plate without bonded,
the gasket body including
a first seal part that contacts the attachment plate,
a second seal part arranged opposite to the first seal part to contact a supported body, and
an insertion protrusion inserted into the insertion space.

2. The gasket according to claim 1, wherein the first seal part includes a seal bead.

3. The gasket according to claim 2, wherein the first seal part includes two or more seal beads that extend in parallel to each other.

4. The gasket according to claim 2 or 3, wherein the seal bead has an arc shape as viewed in a section.

5. The gasket according to any one of claims 1 to 4, wherein the second seal part includes a seal lip.

6. The gasket according to claim 5, wherein the seal lip has a triangular shape as viewed in a section.

7. The gasket according to any one of claims 1 to 6, wherein
the flange part includes a first stopper protrusion, and
the insertion protrusion includes a second stopper protrusion configured to interlock with the first stopper protrusion.
